# EUROPÄISCHE PATENTSCHRIFT

(11) **EP 1 549 530 B1**
(45) Veröffentlichungstag und Bekanntmachung des Hinweises auf die Patenterteilung: **02.08.2006**
(21) Anmeldenummer: 03798854.0
(22) Anmeldetag: 30.05.2003
(51) Int. Cl.: B60R 21/01

(54) **ANORDNUNG ZUM KONTAKTLOSEN ÜBERTRAGEN VON EINEM SIGNAL ZWISCHEN EINEM ERSTEN UND EINEM ZWEITEN FAHRZEUGTEIL**
SYSTEM FOR CONTACTLESSLY TRANSMITTING A SIGNAL BETWEEN A FIRST AND A SECOND VEHICLE COMPONENT
SYSTEME DE TRANSMISSION SANS CONTACT D'UN SIGNAL ENTRE UN PREMIER ET UN SECOND ELEMENT D'UN VEHICULE

(30) Priorität: 01.10.2002 DE 10245783
(43) Veröffentlichungstag der Anmeldung: 06.07.2005
(73) Patentinhaber: ROBERT BOSCH GMBH, 70442 Stuttgart (DE)
(72) Erfinder: KAZMIERCZAK, Harald, 71717 Beilstein (DE)
(86) Internationale Anmeldenummer: PCT/DE2003/001776
(87) Internationale Veröffentlichungsnummer: WO 2004/032088

(56) Entgegenhaltungen:
- DE-A- 3 812 633
- DE-A- 10 103 280
- DE-A- 19 530 586
- DE-A- 19 530 588
- US-A- 5 696 409

## Beschreibung

### Stand der Technik

Die Erfindung geht aus von einer Anordnung zum kontaktlosen Übertragen von einem Signal zwischen einem ersten und einem zweiten Fahrzeugteil nach der Gattung des unabhängigen Patentanspruchs.

Aus DE 195 32 296 A1 ist eine Anordnung zum kontaktlosen Übertragen von einem Signal zwischen einem ersten und einem zweiten Fahrzeugteil bekannt, wobei diese beiden Fahrzeugteile gegeneinander drehbar ausgeführt sind. Die Anordnung weist einen induktiven Übertrager auf, an den primärseitig Diagnosemittel anschließbar sind. Sekundärseitig sind beispielsweise in einem Sitz oder einem Lenkrad Rückhaltemittel angeordnet. Die Diagnosemittel sind zur Analyse des wenigstens einen Rückhaltemittels konfiguriert.

Nachteilig an der in DE 195 32 296 A1 vorgestellten Lösung ist, dass die Art der Diagnose nicht weiter ausgeführt ist.

Aus DE-A-195 30 586 ist es bekannt, eine Anordnung zum Kontrollieren des Widerstands einer an einem Übertrager angeschlossenen Last vorzusehen. Dabei wird der Last ein zusätzlicher Widerstand parallel geschaltet und es sind Mittel vorgesehen, die den primärseitigen Eingangswiderstand des Übertragers messen und bei Abweichung des Eingangswiderstands von einem vorgegebenen Wert einen Fehler der Last signalisieren. Aus DE 38 12 633 A1 ist es bekannt, ein Verfahren zur kontaktlosen Widerstandsmessung vorzusehen. Eine über induktiv gekoppelte Spule von der Primärseite aus in einen sekundärseitigen LCR-Schwingkreis eingekoppeltes Erregersignal wird abgebrochen, zur Primärseite des Transformators zurück übertragen und dient dort über die Auswertung der Zeitkonstante der Erregerantwort zur Bestimmung des Widerstandswertes. Aus DE 195 30 588 A1 ist es bekannt, eine Anordnung zum Kontrollieren des Widerstands einer an einem Übertrager angeschlossenen Last vorzusehen. Dabei sind primärseitig Mittel vorgesehen, die primärseitig ausschließlich die Induktivität des Übertragers messen und bei Abweichung von einem vorgegebenen Wert einen Fehler der Last signalisieren.

### Vorteile der Erfindung

Die erfindungsgemäße Anordnung zum kontaktlosen Übertragen von einem Signal zwischen einem ersten und einem zweiten Fahrzeugteil hat demgegenüber den Vorteil, dass eine Diagnose möglich ist, die nur eine Messmethode erfordert. Diese Messmethode ist hier die Messung einer Messimpedanz. Dazu wird vorzugsweise ein Shuntwiderstand verwendet, über den der Spannungsabfall gemessen wird. Dieser Shuntwiderstand ist primärseitig angeordnet und zeigt in Abhängigkeit von einem durch einen Signalgenerator erzeugtes Mess-Signal einen entsprechenden Spannungsabfall, der abhängig ist vom Widerstand des sekundärseitig angeordneten Zündkreises. In Abhängigkeit von zwei Messungen bei verschiedenen Frequenzen lassen sich Aussagen treffen, ob die Zündpille sekundärseitig in Ordnung ist und insbesondere, ob der Sitz eingebaut ist oder nicht, sofern es sich beim zweiten Fahrzeugteil um einen Sitz handelt. Dies ist insbesondere bei solchen Fahrzeugen interessant, die herausnehmbare Sitze aufweisen, wie beispielsweise sogenannte Sports Utility Vehicles (SUV). Aber auch bei anderen Fahrzeugteilen, wie beispielsweise dem Lenkrad, ist die erfindungsgemäße Anordnung anwendbar. Als Rückhaltemittel kommen beim zweiten Fahrzeugteil Airbags, insbesondere Sidebags, und auch Gurtstraffer zum Einsatz. Die erfindungsgemäße Anordnung ermöglicht damit eine preiswerte und einfache Lösung.

Durch die in den abhängigen Ansprüchen aufgeführten Maßnahmen und Weiterbildungen sind vorteilhafte Verbesserungen der im unabhängigen Patentanspruch angegebenen Anordnung zum kontaktlosen Übertragen von einem Signal zwischen einem ersten und einem zweiten Fahrzeugteil möglich.

Besonders vorteilhaft ist, dass die Messimpedanz als Ohm'scher Widerstand ausgeführt ist. Dies ermöglicht eine einfache messtechnische Charakterisierung, da lediglich der Ohm'sche Widerstand bzw. der über diesen Widerstand abfallende Spannungsabfall zu messen ist.

Vorteilhafterweise sind die Frequenzen des Mess-Signals in einem Bereich zwischen 50 und 500 KHz vorgesehen, was eine einfache Erzeugung dieses Mess-Signals ermöglicht. Insbesondere ist die erfindungsgemäße Anordnung auch dazu geeignet, eine Sitzeinbauerkennung zu ermöglichen. Dies liegt daran, dass anhand den Mess-Signalen erkannt werden kann, ob überhaupt ein Zündkreis sekundärseitig angeordnet ist, wobei hier auch zwischen einem Leerlauf sekundärseitig zu unterscheiden ist.

### Zeichnung

Ein Ausführungsbeispiel der Erfindung ist in der Zeichnung dargestellt und in der nachfolgenden Beschreibung näher erläutert.

### Es zeigen

- Figur 1: ein Blockschaltbild der erfindungsgemäßen Anordnung
- Figur 2: ein Schaltbild der erfindungsgemäßen Anordnung und
- Figur 3: ein Detailschaltbild des Signalgenerators.

### Beschreibung

Die erfindungsgemäße Anordnung funktioniert mit einem einzigen Rückhaltemittel, das sekundärseitig im Sitz angeordnet ist. Ist mehr als ein Rückhaltemittel vorgesehen, dann muß die Anordnung in entsprechender Zahl vorgesehen sein.

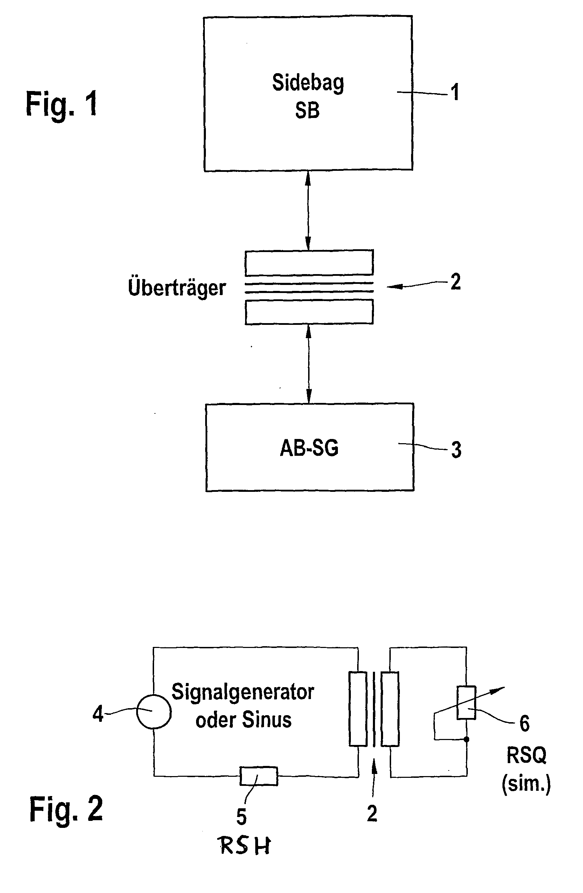

Figur 1 zeigt als Blockschaltbild die erfindungsgemäße Anordnung. Eine Elektronik 1 im Sitz, hier für einen Sidebag, ist über einen Übertrager 2 mit einem Airbagsteuergerät 3 verbunden. Dabei ist das Airbagsteuergerät primärseitig angeordnet und der Sidebag 1 sekundärseitig. Der Übertrager 2 kann als Linearübertrager oder als Drehübertrager ausgebildet sein. Es ist möglich, dass der Übertrager 2 jeweils eine Wicklung primär- und sekundärseitig aufweist, oder mehrere Wicklungen. Anstatt eines Sidebags kann auch ein Frontbag, wie in einem Lenkrad, oder ein Gurtstraffer sekundärseitig angeordnet sein. Das Airbagsteuergerät 3 weist Diagnosemittel auf, um die sekundärseitig angeordnete Elektronik messtechnisch zu überprüfen.

Figur 2 zeigt in einem Schaltbild, wie diese Diagnose funktioniert. Ein Signalgenerator 4 ist primärseitig am Übertrager 2 in Reihe mit einem Messwiderstand 5 (RSH) geschaltet. Der Spannungsabfall über dem Messwiderstand 5 wird zur messtechnischen Diagnose der sekundärseitig angeordneten Impedanz 6 verwendet. Diese sekundärseitig angeordnete Impedanz 6 repräsentiert hier den Zündkreis für den Sidebag 1.

Vom Airbagsteuergerät 3 wird mittels des Signalgenerators 4 ein Sinussignal mit einer ersten Frequenz, beispielsweise 500 KHz, eingespeist. Über den Messwiderstand RSH 5 wird der Spannungsabfall gemessen. Dieser Spannungsabfall ist abhängig vom Widerstand 6 auf der sekundären Seite. Bei einem Kurzschluss beträgt der Spannungsabfall beispielsweise 182 mV, bei einem erhöhten Widerstand oder Veränderungen der Übergangswiderstände auf der Sekundärseite werden Werte von kleiner als 110 mV gemessen. Sind die Sitze nicht eingebaut, dann ergibt sich ein Spannungsabfall von 50 mV. Liefert die Messung einen Wert von unter 110 mV, was hier in diesem Fall kleiner 10 Ohm entspricht, dann ist der Pillenwiderstand in Ordnung und der Sitz ist eingebaut. Liegt der Wert oberhalb von 110 mV, dann ist eine zweite Messung notwendig. Mit der selben Messmethode, also der Impedanz- bzw. Widerstandsmessung und dem selben elektronischen Aufbau wird eine zweite Messung bei beispielsweise 50 KHz durchgeführt. Aus diesem Messergebnis geht dann hervor, dass bei einer Messung von kleiner als 440 mV der Sitz eingebaut ist. Wird bei der ersten Messung ein Wert von 180 mV und bei der zweiten ein Wert von 780 mV gemessen, so liegt ein Kurzschluss auf der Sekundärseite vor. Es ist also notwendig, in einem Speicher im Airbagsteuergerät 3 diese Situationen vorher abzuspeichern, um die Messwerte entsprechend zu interpretieren.

## Patentansprüche

1. Anordnung zum kontaktlosen Übertragen von einem Signal zwischen einem ersten und einem zweiten Fahrzeugteil, wobei die Anordnung einen induktiven Übertrager (2) aufweist, an dem primärseitig ein Steuergerät (3) mit Diagnosemitteln (4, 5) und sekundärseitig ein Rückhaltemittel (1) angeordnet ist, wobei die Diagnosemittel (4, 5) zur Analyse des einen Rückhaltemittels (1) konfiguriert sind, **dadurch gekennzeichnet, dass** die Diagnosemittel (4, 5) einen Signalgenerator (4) zur Erzeugung eines Mess-Signals bei einer ersten sowie bei einer zweiten Frequenz und eine in Reihe geschaltete Messimpedanz (5) aufweisen und die Diagnosemittel (4, 5) derart ausgestaltet und, um in Abhängigkeit von dem Ergebnis einer Spannungsmessung an der Messimpedanz (5) bei der ersten Frequenz auch eine Messung bei der zweiten Frequenz durchzuführen.

2. Anordnung nach Anspruch 1, **dadurch gekennzeichnet, dass** die Messimpedanz als ein Ohm'scher Widerstand ausgebildet ist.

3. Anordnung nach Anspruch 1 oder 2, **dadurch gekennzeichnet, dass** die erste und zweite Frequenz in einem Bereich von 50 bis 500 KHz vorgesehen sind.

4. Anordnung nach einem der vorhergehenden Ansprüche, **dadurch gekennzeichnet, dass** die Diagnosemittel (4, 5) zur Sitzeinbauerkennung konfiguriert sind, indem die Sitzeinbauerkennung mittels des Ergebnisses der Spannungs messung durchgeführt wird.

## Claims

1. Arrangement for the contactless transmission of a signal between a first and a second vehicle component, the arrangement having an inductive transmitter (2) which has a control device (3) comprising diagnosis means (4, 5) arranged on the primary side, and has a restraint means (1) arranged on the secondary side, the diagnosis means (4, 5) being designed to analyse one restraint means (1), **characterized in that** the diagnosis means (4, 5) have a signal generator (4) for generating a measurement signal at a first and at a second frequency, and have a measuring impedance (5) which is connected in series, and the diagnosis means (4, 5) are formed so as to carry out a measurement as a function of the result of a voltage measurement on the measuring impedance (5) at the first frequency and also at the second frequency.

2. Arrangement according to Claim 1, **characterized in that** the measuring impedance is in the form of a nonreactive resistor.

3. Arrangement according to Claim 1 or 2, **characterized in that** the first and the second frequency are in a range of 50 to 500 kHz.

4. Arrangement according to one of the preceding claims, **characterized in that** the diagnosis means (4, 5) are designed to identify whether a seat is installed by identification of whether the seat is installed being carried out by means of the result of the voltage measurement.

## Revendications

1. Système de transmission sans contact d'un signal entre un premier et un second élément d'un véhicule, dans lequel le système comprend un transmetteur inductif (2), dont le côté primaire comporte un appareil de commande (3) avec des moyens de diagnostic (4, 5) alors qu'un moyen de retenue (1) est disposé du côté secondaire, les moyens de diagnostic (4, 5) étant prévus pour l'analyse du moyen de retenue (1),
**caractérisé en ce que**
les moyens de diagnostic (4, 5) comprennent un générateur de signal (4) pour produire un signal de mesure à une première ainsi qu'à une seconde fréquence, et une impédance de mesure (5) montée en série et les moyens de diagnostic (4, 5) sont formés pour effectuer aussi une mesure à la deuxième fréquence, en fonction du résultat d'une mesure de tension sur l'impédance de mesure (5) à la première fréquence.

2. Système selon la revendication 1,
**caractérisé en ce que**
l'impédance de mesure est constituée par une résistance ohmique.

3. Système selon la revendication 1 ou 2,
**caractérisé en ce que**
la première et la seconde fréquences sont prévues dans une plage de 50 à 500 kHz.

4. Système selon l'une quelconque des revendications précédentes,
**caractérisé en ce que**
les moyens de diagnostic (4, 5) sont configurés pour la reconnaissance d'un montage de siège, en effectuant la reconnaissance du montage de siège au moyen du résultat de la mesure de tension.
